# FASCICULE DE BREVET EUROPEEN

(11) **EP 3 571 734 B1**
(45) Date de publication et mention de la délivrance du brevet: **01.06.2022**
(21) Numéro de dépôt: 18702772.7
(22) Date de dépôt: 18.01.2018
(51) Int. Cl.: H01M 4/36, H01M 4/131, C01G 53/00, H01M 4/505, H01M 4/50, H01M 4/525, H01M 10/0525

(54) **MATÉRIAU D'ÉLECTRODE POSITIVE A BASE D'UN OXYDE LAMELLAIRE LITHIE RECOUVERT, EN TOUT OU PARTIE, PAR UN AUTRE OXYDE A BASE DE MANGANÈSE ET PROCÉDÉ DE PRÉPARATION DE CE MATÉRIAU**
POSITIVELEKTRODENMATERIAL AUF DER BASIS EINES VOLLSTÄNDIG ODER TEILWEISE MIT EINEM ANDEREN OXID AUF MANGANBASIS BESCHICHTETEN LITHIIERTEN GESCHICHTETEN OXIDS UND VERFAHREN ZU DESSEN HERSTELLUNG
POSITIVE ELECTRODE MATERIAL BASED ON A LITHIATED LAYERED OXIDE COATED, IN WHOLE OR IN PART, WITH ANOTHER MANGANESE-BASED OXIDE, AND METHOD FOR THE PREPARATION THEREOF

(30) Priorité: 19.01.2017 FR 1750437
(43) Date de publication de la demande: 27.11.2019
(73) Titulaire: Commissariat à l'Énergie Atomique et aux Énergies Alternatives, 75015 Paris (FR)
(72) Inventeur: PERALTA, David, 38000 Grenoble (FR); BOURBON, Carole, 38590 Saint Michel de Saint-Geoirs (FR); COLIN, Jean-François, 38240 Meylan (FR)
(74) Mandataire: Brevalex
(86) Numéro de dépôt international: PCT/FR2018/050129
(87) Numéro de publication internationale: WO 2018/134531

(56) Documents cités:
- WO-A1-2012/093239
- WO-A1-2015/010255
- US-A1- 2014 087 254
- XIANTONG GUAN ET AL: "Enhancing the electrochemical performance of Li1.2Ni0.2Mn0.6O2 by surface modification with nickel-manganese composite oxide", JOURNAL OF SOLID STATE ELECTROCHEMISTRY, vol. 17, no. 7, 7 avril 2013 (2013-04-07), pages 2087-2093, XP055257599, DE ISSN: 1432-8488, DOI: 10.1007/s10008-013-2070-y
- YUNJIAN LIU: "iNFLUENCE OF COATED mNo2 CONTENT ON THE ELECTROCHEMICAL PERFORMANCE OF Li1.2Ni0.2 Mn0.6O2 cathodes", IONICS, vol. 20, no. 6, 18 décembre 2013 (2013-12-18), XP002774230, ISSN: 1862-0760, DOI: https://doi.org/10.1007/s11581-013-1048-1
- CHIH-CHIEH WANG ET AL: "Effect of Synthesis Conditions on the First Charge and Reversible Capacities of Lithium-Rich Layered Oxide Cathodes", CHEMISTRY OF MATERIALS, vol. 25, no. 15, 5 juillet 2013 (2013-07-05), pages 3267-3275, XP055104724, ISSN: 0897-4756, DOI: 10.1021/cm402181f
- KIM D ET AL: "High-energy and high-power Li-rich nickel manganese oxide electrode materials", ELECTROCHEMISTRY COMMUNICATIONS, ELSEVIER, AMSTERDAM, NL, vol. 12, no. 11, 1 novembre 2010 (2010-11-01), pages 1618-1621, XP027444469, ISSN: 1388-2481, DOI: 10.1016/J.ELECOM.2010.09.009 [extrait le 2010-10-23] cité dans la demande

## Description

### DOMAINE TECHNIQUE

La présente invention a trait à de nouveaux matériaux et, plus spécifiques à des nouveaux matériaux d'électrode positive à base d'un oxyde lamellaire lithié recouvert, en tout ou partie, par un autre oxyde à base de manganèse ainsi qu'à un procédé de préparation de ces matériaux. Ces matériaux trouvent leur application dans le domaine des batteries au lithium et, plus spécifiquement, des batteries lithium-ion.

Les batteries lithium-ion sont particulièrement intéressantes pour les domaines où l'autonomie est un critère primordial, tels que cela est le cas du domaine des appareils nomades (tels que les téléphones portables, les ordinateurs portables) ou du domaine des transports tels que les véhicules électriques, les véhicules hybrides, ou encore des domaines médicaux, spatiaux ou de la microélectronique.

D'un point de vue fonctionnel, les batteries lithium-ion reposent sur le principe de l'intercalation-désintercalation du lithium au sein des matériaux constitutifs des électrodes des cellules électrochimiques de la batterie.

Plus précisément, la réaction à l'origine de la production de courant (c'est-à-dire lorsque la batterie est en mode de décharge) met en jeu le transfert, par l'intermédiaire d'un électrolyte conducteur d'ions lithium, de cations lithium provenant d'une électrode négative qui viennent s'intercaler dans le réseau accepteur de l'électrode positive, tandis que des électrons issus de la réaction à l'électrode négative vont alimenter le circuit extérieur, auquel sont reliées les électrode positive et négative.

Dans les batteries lithium-ion, l'élément le plus critique et le plus limitatif s'avère être l'électrode positive et, plus spécifiquement, le matériau actif de l'électrode positive. En effet, ce sont les propriétés du matériau actif de l'électrode positive qui détermineront la densité d'énergie, la tension et la durée de vie de la batterie.

Afin d'augmenter la densité d'énergie, de nouveaux matériaux actifs d'électrode positive ont fait l'objet de recherche et, notamment des matériaux de la famille des oxydes lamellaires, tels que :
- les oxydes mixtes Li(Ni,Co,Mn)O₂ (et plus spécifiquement Li(Ni_{1/3}Mn_{1/3}Co_{1/3})O₂), ces oxydes étant connus également sous la dénomination NMC ;
- les oxydes mixtes Li(Ni, Co, Al)O₂ (et plus spécifiquement Li(Ni_{0,8}Co_{0,15}Al_{0,05}O₂)), ces oxydes étant connus également sous la dénomination NCA.

Plus spécifiquement, l'oxyde de formule Li(Ni_{1/3}Mn_{1/3}Co_{1/3})O₂ est, de nos jours, utilisé pour la fabrication des batteries destinées aux voitures électriques, tandis que l'oxyde de formule Li(Ni_{0.8}Co_{0.15}Al_{0.05}O₂) est depuis peu commercialisé et permet d'obtenir des cellules électrochimiques possédant une très grande densité d'énergie.

Il est également envisagé de pouvoir utiliser, comme matériaux actifs d'électrode positive, des matériaux appartenant à la catégorie des oxydes lamellaires lithiés et, plus précisément, des oxydes lamellaires surlithiés, notamment pour des applications nécessitant l'usage de batteries à très haute densité. Toutefois, ces matériaux présentent des verrous technologiques et, notamment, celui de la modification de la structure du matériau au cours du cyclage, ce qui peut entraîner une chute du potentiel moyen de la batterie au cours des cycles.

Les matériaux du type oxyde lamellaire, tels que les oxydes lamellaires lithiés, sont caractérisés par l'empilement de feuillets de formule [MO₂] (M désignant le ou les éléments métalliques) constitués d'octaèdres associés, tandis que le lithium se place, en tout ou partie, entre lesdits feuillets (soit, en d'autres termes, dans des interfeuillets). Selon la symétrie de l'environnement du lithium, il a été proposé une classification structurale définie par les abréviations O3 et O2 (dits également empilement du type O3 ou du type O2).

Pour l'empilement du type O3, les ions Li⁺ occupent des sites octaédriques partageant des arêtes avec les octaèdres MO₆ (M désignant le ou les éléments métalliques) constitutifs des feuillets susmentionnés.

Quant à l'empilement du type O2, les ions Li⁺ occupent des sites octaédriques partageant des faces et des arêtes avec les octaèdres MO₆ (M désignant le ou les éléments métalliques) constitutifs des feuillets susmentionnés.

Pour l'empilement du type O3, lorsque le matériau est chargé notamment au-delà de 4,3 V, des cations métalliques vont migrer des sites octaédriques du feuillet métallique vers l'interfeuillet de lithium, ce qui correspond à une déstructuration du matériau induisant une chute du potentiel moyen de la batterie.

En revanche, pour l'empilement du type O2, l'inversion du sens des octaèdres des feuillets métalliques par rapport au type O3 rend défavorable la migration des cations métalliques vers l'interfeuillet de lithium. L'évolution de la structure au cours de cycles est alors jugulée et la chute de potentiel limitée.

Aussi, les oxydes lamellaires lithiés du type O2 s'avèrent être plus avantageux et c'est la raison pour laquelle certains auteurs ont mis en place des procédés de préparation de tels oxydes en particulier par échange ionique avec un précurseur à base de sodium, tel que dans Electrochemistry Communications 12 (2010) 1618-1621*,* dans lequel un oxyde lamellaire surlithié de formule Liₓ(Ni_{0,25}Mn_{0,75})O_{y} (x>1) de type O2 est préparé à partir d'un précurseur à base de sodium Na_{0,9}Li_{0,3}Ni_{0,25}Mn_{0,75}O_{δ}, lequel est soumis à un réaction d'échange ionique pour remplacer les ions sodium par des ions lithium en le mettant en contact avec un sel de lithium LiBr avec une préparation préalable dudit précurseur par mélange et chauffage de poudres de Ni_{0,25}Mn_{0,75}CO₃, de Na₂CO₃ et de Li₂CO_{3.} D'autres matériaux d'électrode positive pour batteries au lithium comprenant des oxydes lamellaires lithiés sont décrits dans Journal of Solid State Electrochemistry, vol. 17, no. 7, (2013), pages 2087-2093 et Ionics (2014), vol. 20:825-831.

Si les oxydes lamellaires lithiés du type O2 présente une structure qui n'évolue pas au cours de cyclages classiques, ces oxydes placés dans un environnement de température élevée peuvent subir une modification de structure, qui engendre une transformation du type O2 en type O3 et ainsi une structure non stable en cyclage.

Au vu de qui existe, les auteurs de la présente invention se sont proposé de mettre au point de nouveaux matériaux d'électrode positive à base d'un oxyde lamellaire lithié de type O2 dont le comportement électrochimique est amélioré et dont le procédé de préparation n'induit pas une modification de structure de cet oxyde.

### EXPOSÉ DE L'INVENTION

Les auteurs de la présente invention ont découvert qu'en adjoignant à un oxyde lamellaire lithié de type O2 un revêtement spécifique il est possible d'améliorer significativement les propriétés électrochimiques du matériau résultant (notamment, une augmentation de la capacité à tous les régimes de charge/décharge) et ont découvert également un procédé de préparation d'un tel matériau sans que celui ne dégrade l'oxyde lamellaire lithié de type O2.

Ainsi, l'invention a trait à un matériau d'électrode positive pour batterie au lithium comprenant un oxyde lamellaire métallique lithié comprenant un ou plusieurs éléments métalliques disposés sous forme de feuillets de cations métalliques (à savoir, des cations de Ni, Mn, Co, M au regard de la formule (I) ci-dessous) et du lithium disposé dans des interfeuillets de cations lithium et, en partie, dans les feuillets de cations métalliques, lesdits interfeuillets assurant la séparation entre lesdits feuillets, ledit oxyde présentant un empilement O2 et répondant à la formule (I) suivante :

Li(_{a+b})Ni_{c}Mn_{d}CoₑM_{f}O_{g} (I)

dans laquelle :
^{∗}a représente la proportion de lithium compris dans les interfeuillets et étant supérieur à 0 et inférieur ou égal à 1 ;
^{∗}b représente la proportion de lithium compris dans les feuillets de cations métalliques et étant supérieur à 0 et inférieur ou égal à (1/3) ;
^{∗}c, d, e et f sont compris entre 0 et 1, avec la condition que b+c+d+e+f=1, de sorte à ce que l'électroneutralité de l'oxyde de formule (I) soit respectée ;
^{∗}g est compris entre 1,9 et 2,1, par exemple, est égal à 2 ;
*lorsque f est différent 0, M est au moins un élément choisi parmi Al, Fe, Ti, Cr, V, Cu, Mg, Zn, Na, K, Ca, Sc et les combinaisons de ceux-ci ;
caractérisé en ce que ledit oxyde est recouvert, en tout ou partie, par un oxyde de formule (II) suivante :

   MnₕM'ᵢO₂ (II)

   dans laquelle :
   ^{∗}0<h≤1,5, de préférence égal à 1 ;
   ^{∗}M' est un au moins un élément choisi parmi Ni, Al, Fe, Ti, Cr, V, Cu, Mg, Zn, Na, K, Ca, Sc
   ^{∗}0≤i≤1,5.

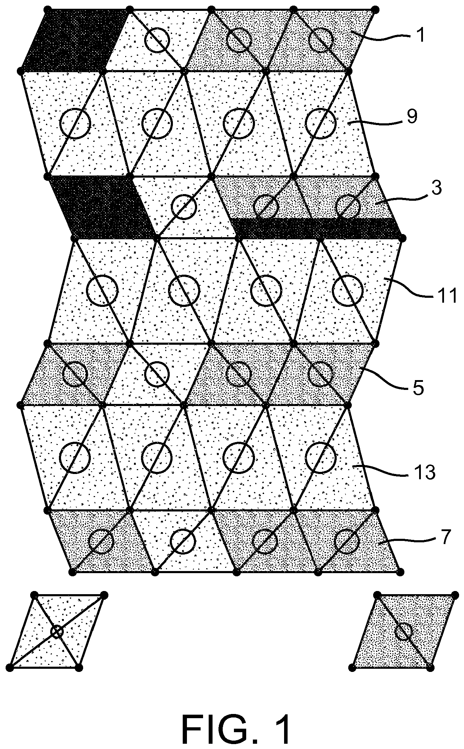

Pour une meilleure compréhension de l'invention, il est fourni, en annexe, à titre illustratif et non limitatif, une figure 1 illustrant schématiquement un empilement de type O2 conforme à l'invention comprenant des feuillets d'octaèdres occupés, en leur centre, par des cations métalliques (par exemple, Ni ou Mn) numérotés 1, 3, 5 et 7 séparés par des interfeuillets 9, 11 et 13, dont les octaèdres sont occupés en leur centre par des cations lithium, chaque feuillet comprenant un de ces octaèdres occupé en son centre par un cation lithium, les autres octaèdres étant occupés en leur centre par des cations métalliques (par exemple, Ni ou Mn).

Selon un mode particulier de réalisation de l'invention, e et f peut être égal à 0, auquel cas l'oxyde lamellaire lithié répond à la formule (III) suivante :

Li_{(a+b)}Ni_{c}Mn_{d}O_{g} (III)

avec a, b, c et d étant tels que définis ci-dessus.

Quant aux indices b, c et d, ils répondront dans ce cas de figure à la relation b+c+d=1 avec la condition que b, c et d soient différents de 0. En tout état de cause, il s'entend, de façon générale, que les valeurs de b, c et d seront choisis de sorte à ce que le composé de formule (III) soit électriquement neutre.

Un oxyde spécifique conforme à la définition des oxydes de formule (III) susmentionnée est l'oxyde de formule (IV) suivante (avec a=1, b=0,2, c=0,2, d=0,6 et g=2):

Li_{1,2}Ni_{0,2}Mn_{0,6}O₂ (IV)

De manière spécifique et avantageuse, (a+b) peut être supérieur à 1, auquel cas l'oxyde lamellaire appartient à la catégorie des oxydes lamellaires surlithiés.

Selon un mode particulier de l'invention, h peut être égal à 1 et i peut être égal à 0, auquel cas l'oxyde recouvrant l'oxyde lamellaire lithié répond à la formule MnO₂ et est donc de l'oxyde de manganèse (IV).

Plus spécifiquement, le matériau de l'invention peut se présenter sous forme de particules constituées par l'oxyde lamellaire métallique lithié présentant un empilement de type O2, lesdites particules étant enrobées par une couche d'enrobage constituée par l'oxyde de formule (II) susmentionnée.

En d'autres termes, le matériau de l'invention peut être défini comme se présentant sous formes de particules comprenant un cœur constitué par l'oxyde lamellaire lithié présentant un empilement de type O2 et une couche d'enrobage constituée par l'oxyde de formule (II) susmentionnée entourant ledit cœur.

Le ratio (oxyde lamellaire lithié/couche d'enrobage) peut varier dans les proportions molaires suivantes : 99,9% d'oxyde lamellaire lithié/0,1% de couche d'enrobage à 90% d'oxyde lamellaire lithié/10% de couche d'enrobage.

Comme son nom l'indique, le matériau de l'invention est un matériau d'électrode positive pour batterie au lithium et plus spécifiquement pour batterie lithium-ion. Il est donc tout naturellement destiné à entrer dans la constitution d'une batterie au lithium.

Ainsi, l'invention a trait également à une batterie au lithium comprenant au moins une cellule électrochimique comprenant un électrolyte disposé entre une électrode positive et une électrode négative, ladite électrode positive comprenant un matériau conforme à l'invention.

Par électrode positive, on entend, classiquement, dans ce qui précède et ce qui suit, l'électrode qui fait office de cathode, quand le générateur débite du courant (c'est-à-dire lorsqu'il est en processus de décharge) et qui fait office d'anode lorsque le générateur est en processus de charge.

Par électrode négative, on entend, classiquement, dans ce qui précède et ce qui suit, l'électrode qui fait office d'anode, quand le générateur débite du courant (c'est-à-dire lorsqu'il est en processus de décharge) et qui fait office de cathode, lorsque le générateur est en processus de charge.

L'électrode négative peut être, par exemple, du lithium sous forme métallique, ou bien peut être un matériau apte à insérer et désinsérer du lithium, tel qu'un matériau carboné comme du graphite, un matériau oxyde tel que Li₄Ti₅O₁₂ ou un composé apte à former alliage avec du lithium, tel que du silicium ou de l'étain.

L'électrode positive, quant à elle, peut comprendre, outre le matériau conforme à l'invention, un liant et un additif conducteur électronique, tel que du carbone.

L'électrolyte, quant à lui, peut comprendre, en général, un sel de lithium, par exemple, choisi parmi LiClO₄, LiAsF₆, LiPF₆, LiBF₄, LiRfSO₃, LiCH₃SO₃, LiN(RfSO₂)₂, Rf étant choisi F ou un groupe perfluoroalkyle comportant de 1 à 8 atomes de carbone, du trifluorométhanesulfonylimide de lithium (connu sous l'abréviation LiTfSI), du bis(oxalato)borate de lithium (connu sous l'abréviation LiBOB), du bis(perfluoréthylsulfonyl)imide de lithium (également connu sous l'abréviation LiBETI), du fluoroalkylphosphate de lithium (connu sous l'abréviation LiFAP).

Le sel de lithium est, de préférence, dissous dans un solvant polaire aprotique.

En outre, l'électrolyte peut être amené à imbiber un élément séparateur disposé entre les deux électrodes de l'accumulateur.

Dans le cas d'une batterie au lithium comprenant un électrolyte polymère, le sel de lithium n'est pas dissous dans un solvant organique, mais dans un composite polymère solide, tel que le polyoxyde d'éthylène (connu sous l'abréviation POE), le polyacrylonitrile (connu sous l'abréviation PAN), le polyméthacrylate de méthyle (connu sou l'abréviation PMMA), le polyfluorure de vinylidène (connu sous l'abréviation PVDF), le polychlorure de vinylidène (connu sous l'abréviation PVC) ou un de leurs dérivés.

Le matériau de l'invention doit être, avantageusement, préparé dans des conditions opératoires permettant le dépôt de l'oxyde de formule (II) sur tout ou partie de l'oxyde lamellaire lithié de formule (I) sans engendrer de modifications du type O2 dudit oxyde (par exemple, modification du type O2 vers le type O3).

Ainsi, les auteurs de la présente invention ont mis au point un procédé de préparation d'un matériau d'électrode positive pour batterie au lithium comprenant un oxyde lamellaire métallique lithié comprenant un ou plusieurs éléments métalliques disposés sous forme de feuillets de cations métalliques (à savoir, des cations de Ni, Mn, Co, M au regard de la formule (I) ci-dessous) et du lithium disposé dans des interfeuillets de cations lithium et, en partie, dans les feuillets de cations métalliques, lesdits interfeuillets assurant la séparation entre lesdits feuillets, ledit oxyde présentant un empilement O2 et répondant à la formule (I) suivante:

Li(_{a+b})Ni_{c}Mn_{d}CoₑM_{f}O_{g} (I)

dans laquelle :
^{∗}a représente la proportion de lithium compris dans les interfeuillets et étant supérieur à 0 et inférieur ou égal à 1 ;
^{∗}b représente la proportion de lithium compris dans les feuillets de cations métalliques et étant supérieur à 0 et inférieur ou égal à (1/3) ;
^{∗}c, d, e et f sont compris entre 0 et 1, avec la condition que b+c+d+e+f=1, de sorte à ce que l'électroneutralité de l'oxyde de formule (I) soit respectée ;
^{∗}g est compris entre 1,9 et 2,1, par exemple, est égal à 2 ;
*lorsque f est différent 0, M est au moins un élément choisi parmi Al, Fe, Ti, Cr, V, Cu, Mg, Zn, Na, K, Ca, Sc et les combinaisons de ceux-ci ;
ledit oxyde étant recouvert, en tout ou partie, par un oxyde de formule (II) suivante :

   MnₕM'ᵢO₂ (II)

   dans laquelle :
   ^{∗}0<h≤1,5, de préférence égal à 1 ;
   ^{∗}M' est au moins un élément choisi parmi Ni, Al, Fe, Ti, Cr, V, Cu, Mg, Zn, Na, K, Ca, Sc ;
   ^{∗}0≤i≤1,5 ;
   ledit procédé comprenant les étapes suivantes :
      a) une étape de synthèse de l'oxyde lamellaire lithié présentant un empilement de type O2 ;
      b) une étape de synthèse de l'oxyde de formule (II) sur tout ou partie de l'oxyde lamellaire lithié.

Plus précisément, l'étape de synthèse de l'oxyde lamellaire lithié présentant un empilement de type O2 comprend les opérations suivantes :
i) une opération de synthèse d'un carbonate mixte ou d'un hydroxyde mixte comprenant les autres éléments que Li par mise en contact, sous agitation, des autres éléments que Li sous forme de cations avec des anions carbonates, lorsqu'il s'agit de synthétiser le carbonate mixte, ou avec des anions hydroxydes, lorsqu'il s'agit de synthétiser l'hydroxyde mixte ;
ii) une opération de synthèse d'un oxyde de formule NaₓLi_{y}Ni_{c} Mn_{d}CoₑM_{f}O_{g} avec x étant compris entre 0 et 1 (de préférence, entre 0,5 et 0,8), y étant compris entre 0 et 1 (de préférence, entre 0,01 et 1/3), c, d, e, f, g et M étant tels que définis ci-dessus, ledit oxyde présentant un empilement de type P2, par réaction du carbonate mixte obtenu à l'étape i) avec un mélange carbonate de lithium/carbonate de sodium ou par réaction de l'hydroxyde mixte obtenu à l'étape i) avec un mélange hydroxyde de lithium/hydroxyde de sodium ;
iii) une opération d'échange du sodium de l'oxyde obtenu en ii) par du lithium, moyennant quoi il résulte l'oxyde lamellaire lithié présentant un empilement de type O2.

Concernant l'opération i), on précise que, par carbonate mixte comprenant les autres éléments que Li, il s'agit d'un composé comprenant un anion CO₃²⁻ et des cations des autres éléments que Li (à savoir, les éléments présents dans l'oxyde hormis Li, qui est introduit subséquemment).

Par hydroxyde mixte comprenant les autres éléments que Li, on précise qu'il s'agit d'un composé comprenant un anion OH⁻ et des cations des autres éléments que Li (à savoir, les éléments présents dans l'oxyde hormis Li, qui est introduit subséquemment).

Lorsqu'il est choisi de passer par la synthèse d'un carbonate mixte (dite également voie carbonate), l'opération i) consiste ainsi à mettre en contact, sous agitation, les autres éléments que Li sous forme de cations avec des anions carbonates.

Plus spécifiquement, les autres éléments que Li sous forme de cations peuvent être apportés *via* une solution comprenant des sels des autres éléments que Li (par exemple, du sulfate de nickel, du sulfate de manganèse, du sulfate de cobalt et du sulfate de M ou encore du nitrate de nickel, du nitrate de manganèse, du nitrate de cobalt et du nitrate de M), tandis que les anions carbonates peuvent être apportés *via* une solution comprenant un carbonate de métal alcalin (tel que du carbonate de sodium Na₂CO₃). Il peut être envisageable de régler la quantité de carbonate de métal alcalin ajoutée, de sorte à ce qu'une partie de celui-ci contribue à la régulation du pH dans une gamme pouvant aller, par exemple, de 6,5 à 8,5, de préférence égal à 7,5.

Lorsqu'il est choisi de passer par la synthèse d'un hydroxyde mixte (dite également voie hydroxyde), l'étape a) consiste à mettre en contact, sous agitation, les autres éléments que Li sous forme de cations avec des anions hydroxydes.

Plus spécifiquement, les autres éléments que Li sous forme de cations peuvent être apportés *via* une solution comprenant des sulfates des autres éléments que Li (par exemple, du sulfate de nickel, du sulfate de manganèse, du sulfate de cobalt et du sulfate de M ou encore du nitrate de nickel, du nitrate de manganèse, du nitrate de cobalt et du nitrate de M), tandis que les anions hydroxydes peuvent être apportés *via* une solution comprenant un hydroxyde de métal alcalin (tel que de la soude NaOH). Il peut être envisageable de régler la quantité d'hydroxyde de métal alcalin ajoutée, de sorte à ce qu'une partie de celui-ci contribue à la régulation du pH dans une gamme pouvant aller, par exemple, de 9 à 11, de préférence égal à 10.

Sans être lié par la théorie, l'étape de synthèse d'un carbonate mixte ou d'un hydroxyde mixte consiste en un mécanisme de coprécipitation des cations des autres éléments que Li avec les anions carbonates ou hydroxydes, moyennant quoi il résulte le carbonate mixte ou l'hydroxyde mixte.

Plus spécifiquement, l'étape de synthèse d'un carbonate mixte ou d'un hydroxyde mixte peut consister à coprécipiter sous agitation, en milieu basique (par exemple, un milieu comprenant de l'ammoniaque), une solution comprenant les ions des éléments autres que Li (cette solution pouvant être obtenue par dissolution de sels de type sulfate, nitrate ou autre) et une solution comprenant un carbonate de sel alcalin (par exemple, du carbonate de sodium), lorsqu'il s'agit de préparer un carbonate mixte ou un hydroxyde de sel alcalin (par exemple, de l'hydroxyde de sodium), lorsqu'il s'agit de préparer un hydroxyde mixte.

Encore plus spécifiquement, l'étape de synthèse d'un carbonate mixte ou d'un hydroxyde mixte peut comprendre les opérations suivantes :
- une opération d'injection, dans un réacteur (par exemple, un réacteur du type CSTR) comprenant de l'eau, d'une solution comprenant les ions d'éléments autres que Li (dite solution métallique) et d'une solution d'un carbonate (par exemple, un carbonate de métal alcalin) ou d'un hydroxyde (par exemple, un hydroxyde de métal alcalin) avec une vitesse d'agitation prédéterminée et à un pH prédéterminé ;
- une opération de maintien de l'agitation du précipité formé pendant une durée appropriée pour la formation complète du carbonate mixte ou de l'hydroxyde mixte ;
- une opération d'isolement du précipité suivie d'une opération de séchage, moyennant quoi il subsiste une poudre de carbonate mixte ou d'hydroxyde mixte.

Dans le cadre de ce mode de réalisation, les conditions opératoires influentes sont le pH et la vitesse d'agitation susmentionnés (ces conditions étant mentionnées ci-dessus par les expressions « pH prédéterminé » et « vitesse d'agitation prédéterminée »).

De manière avantageuse, les conditions opératoires de pH peuvent être fixées de la manière suivante :
^{∗}dans le cas d'une synthèse utilisant la soude comme solution précipitante dans le but d'obtenir un hydroxyde mixte, le pH peut être fixé à une valeur allant entre 9 et 11,5 et préférentiellement égale à 10 ;
^{∗}dans le cas d'une synthèse utilisant un carbonate (par exemple, Na₂CO₃) comme solution précipitante dans le but d'obtenir un carbonate mixte, le pH peut être fixé à une valeur allant entre 6,5 et 8,5 et préférentiellement égale à 7,5.

Quant à la vitesse d'agitation, elle peut être, avantageusement choisie :
- lorsqu'il s'agit de préparer un hydroxyde mixte, de sorte à dissiper une puissance comprise entre 10 et 10000 W/m³, de préférence supérieure à 500 W/m³;
- lorsqu'il s'agit de préparer un carbonate mixte, de sorte à dissiper une puissance comprise entre 10 et 10000 W/m³, de préférence inférieure à 500 W/m³, de préférence encore de 2,0 W/m³ à 253,2 W/m³ et, encore plus préférentiellement, de 2,0 W/m³ à 100 W/m³.

En outre, l'opération de synthèse d'un carbonate mixte ou d'un hydroxyde mixte peut être fixée à une température allant de 30 à 70°C, par exemple, une température de 50°C.

Enfin, la concentration de la solution comprenant les ions des autres éléments que Li peut aller de 0,8 à 3 M, par exemple, une concentration de 2 M.

Le carbonate mixte ou hydroxyde mixte ainsi préparé peut être ainsi lavé et soumis à une opération d'isolement, par exemple, par filtration et à une opération de séchage (par exemple, sous vide, pendant une nuit).

Le carbonate mixte obtenu répond à la formule suivante Ni_{c}Mn_{d}CoₑM_{f}CO₃ avec c, d, e et f étant tels que définis ci-dessus, tandis que l'hydroxyde mixte obtenu répond à la formule suivante Ni_{c}Mn_{d}CoₑM_{f}(OH)₂ avec c, d, e et f étant tels que définis ci-dessus.

Une fois le carbonate mixte ou l'hydroxyde mixte réalisé, celui-ci est mis à réagir avec un mélange carbonate de lithium/carbonate de sodium, lorsqu'il s'agit du carbonate mixte ou avec un mélange hydroxyde de lithium/hydroxyde de sodium, lorsqu'il s'agit de l'hydroxyde mixte, moyennant quoi il est obtenu un oxyde de formule NaₓLi_{y}Ni_{c}Mn_{d}CoₑM_{f}O_{g} avec x étant compris entre 0 et 1 (de préférence, entre 0,5 et 0,8), y étant compris entre 0 et 1 (de préférence, entre 0,01 et 1/3), c, d, e, f, g et M étant tels que définis ci-dessus, ledit oxyde présentant un empilement de type P2.

Classiquement, cette réaction est réalisée à sec avec les réactifs se présentant sous forme de poudres et en appliquant au mélange de poudres un traitement thermique de calcination à une température et une durée permettant l'obtention de l'oxyde de formule NaₓLi_{y}Ni_{c}Mn_{d}CoₑM_{f}O_{g}. La température de calcination peut être comprise entre 700°C et 1000°C, de préférence est égale à 850°C. La durée de calcination peut être comprise entre 1 heure et 50 heures, de préférence, entre 10 heures et 24 heures. Une étape supplémentaire durant la calcination peut être effectuée, de sorte à atteindre un palier de température. La température de ce palier peut être comprise entre 300°C et 700°C, de préférence, entre 400°C et 500°C. La durée de ce palier peut être comprise entre 1 heure et 24 heures, de préférence, entre 5 heures et 10 heures. Ces conditions de température et de durée associées peuvent être déterminées par l'homme du métier par le biais d'essais préalables, l'obtention du produit voulu (ici, l'oxyde de formule susmentionnée et présentant l'empilement de type P2 ) pouvant être détectée par diffraction aux rayons X.

Enfin, l'oxyde préparé à l'opération ii) est destiné à subir une opération d'échange du sodium par du lithium, moyennant quoi il résulte l'oxyde lamellaire lithié présentant un empilement de type O2.

Plusieurs procédés d'échange ioniques peuvent être envisagés pour échanger le sodium par du lithium, tels que :
- le procédé d'échange ionique en milieu sel fondu par utilisation de Lil, LiNO₃ ou encore d'un mélange eutectique comme LiNO₃-LiCl ;
- le procédé d'échange ionique en voie liquide par utilisation, par exemple, de LiBr ou Lil dans un solvant.

Il est à noter que les conditions opératoires de l'opération ii) et de l'opération iii) n'affectent généralement pas la morphologie du carbonate mixte ou de l'hydroxyde mixte obtenu à l'opération i).

Enfin, le procédé de l'invention comprend une étape de synthèse (étape b) de l'oxyde de formule (II) sur tout ou partie de l'oxyde lamellaire lithié préparé à l'étape a).

Plus spécifiquement, cette étape de synthèse b) peut comprendre les opérations suivantes :
i1) une opération de préparation d'une solution comprenant des cations manganèse et, le cas échéant, des cations de l'élément M' ;
i2) une opération de mise en contact de la solution préparée en i1) avec l'oxyde lamellaire lithié présentant un empilement de type O2 préparé au cours de l'étape a) définie ci-dessus ;
i3) une opération d'ajout au mélange obtenu en i2) d'une solution comprenant des anions carbonates ou des anions hydroxydes et de réaction, moyennant quoi il résulte l'oxyde lamellaire lithié présentant un empilement de type O2 revêtu en tout ou partie par un carbonate comprenant du manganèse et, le cas échéant, l'élément M' ou par un hydroxyde comprenant du manganèse et, le cas échéant, l'élément M' ;
i4) une opération d'oxydation du carbonate comprenant du manganèse et, le cas échéant, l'élément M' ou de l'hydroxyde comprenant du manganèse et, le cas échéant, l'élément M', moyennant quoi il subsiste l'oxyde lamellaire lithié présentant un empilement de type O2 revêtu, en tout ou partie, par un oxyde de formule (II) susmentionnée.

Concernant l'opération i1), celle-ci peut être, plus précisément, mise en œuvre par dissolution d'un sel de manganèse et, le cas échéant, d'un sel de M' dans de l'eau, ledit sel pouvant être, avantageusement, un sulfate, un nitrate ou un chlorure. La concentration de la solution dépend essentiellement du ratio oxyde lamellaire lithié/enrobage souhaité.

Pour faciliter la dissolution, la solution résultante peut être chauffée sous agitation, par exemple à 60°C.

A cette solution est ajouté, ensuite, comme défini à l'opération i2), l'oxyde lamellaire lithié présentant un empilement de type O2 puis, au mélange résultant, conformément à l'opération i3), une solution comprenant des anions carbonates ou des anions hydroxydes. Cette dernière solution peut être préparée préalablement par dissolution d'un sel comprenant des anions carbonates (par exemple, du carbonate de sodium Na₂CO₃) ou des anions hydroxydes (par exemple, de l'hydroxyde de sodium NaOH) dans de l'eau. La concentration de cette dernière solution peut être choisie, avantageusement, de manière à ce que les ions CO₃²⁻ ou OH⁻ puissent réagir, de manière stoechiométrique, avec les cations manganèse et les cations de l'élément M' pour former un carbonate comprenant du manganèse et, le cas échéant, l'élément M' ou un hydroxyde comprenant du manganèse et, le cas échéant, l'élément M' qui se forme sur tout ou partie de l'oxyde lamellaire lithié présentant un empilement de type O2.

Cette opération i3) peut être effectuée sous forte agitation à une température et une durée efficaces pour obtenir la réaction entre les ions carbonate et les ions manganèse et, le cas échéant, les ions de l'élément M' (par exemple, à une température de 60°C pendant 4 heures).

Le mélange issu de l'opération i3) peut être alors soumis à une filtration, le rétentat étant ensuite soumis à un lavage, par exemple, avec de l'eau distillée puis séché, par exemple, sous air ou sous vide, dans un étuve à 120°C pendant une nuit. Il en résulte une poudre constituée de l'oxyde lamellaire lithié présentant un empilement de type O2 revêtu en tout ou partie par un carbonate comprenant du manganèse et, le cas échéant, l'élément M' ou par un hydroxyde comprenant du manganèse et, le cas échéant, l'élément M'.

Ledit oxyde lamellaire lithié ainsi revêtu est soumis à une opération d'oxydation du carbonate comprenant du manganèse et, le cas échéant, l'élément M' ou de l'hydroxyde comprenant du manganèse et, le cas échéant l'élément M', moyennant quoi il subsiste l'oxyde lamellaire lithié présentant un empilement de type O2 revêtu, en tout ou partie, par un oxyde de formule (II) susmentionnée.

Cette opération d'oxydation est réalisée sous air dans des conditions de température et de durée, qui préservent l'oxyde lamellaire lithié présentant un empilement de type O2, c'est-à-dire qui n'induisent pas une modification structurale de celui-ci par exemple en transformant le type structural de celui-ci, telle qu'un changement du type O2 vers le type O3.

A titre d'exemple, lorsque le composé oxyde de formule (II) représente 3% molaire par rapport à l'oxyde lamellaire lithié de formule (I), l'opération est réalisée, de préférence, sous air à une température de 400°C maintenue pendant 5 minutes.

D'autres caractéristiques apparaîtront mieux à la lecture du complément de description qui suit, lequel se rapporte à des exemples de fabrication de matériaux conformes à l'invention.

Bien entendu, les exemples qui suivent ne sont donnés qu'à titre d'illustration de l'objet de l'invention et ne constituent, en aucun cas, une limitation de cet objet.

### BREVE DESCRIPTION DES FIGURES

La figure 1 est un schéma illustre un empilement de type O2 conforme à l'invention.
La figure 2 est un graphique représentant l'évolution de la capacité spécifique C (en mAh/g) en fonction du nombre de cycles N de différents matériaux décrits conformément à l'exemple 2.
La figure 3 est un graphique représentant l'évolution du potentiel (en V) en fonction du nombre de cycles N de différents matériaux décrits conformément à l'exemple 2.

### EXPOSÉ DÉTAILLÉ DE MODES DE RÉALISATION PARTICULIERS

### EXEMPLE 1

Cet exemple illustre la préparation d'un matériau conforme à l'invention de formule Li_{1,2}Ni_{0,2}Mn_{0,6}O₂ (soit a=1 ; b=0,2 ; c=0,2 ; d=0,6 et g=2) comprenant les étapes suivantes :
- une étape de préparation d'un carbonate mixte de formule Ni_{0,25}Mn_{0,75}CO₃ par coprécipitation (étape a) ;
- une étape de préparation d'un oxyde lamellaire de formule Na_{0,7}Li_{0,16}Ni_{0,2}Mn_{0,6}O₂ présentant un empilement de type P2 (étape b) ;
- une étape de préparation d'un oxyde lamellaire de formule Li_{1,2}Ni_{0,2}Mn_{0,6}O₂ présentant un empilement de type O2 (étape c) ;
- une étape de dépôt d'une couche de carbonate de manganèse sur l'oxyde lamellaire préparé à l'étape précédente (étape d) ; et
- une étape d'oxydation de la couche de MnCO₃ pour obtenir une couche d'oxyde de manganèse MnO₂ (étape e).

### a) Préparation d'un carbonate mixte de formule Ni_{0,25}Mn_{0,75}CO₃ par coprécipitation

Pour ce faire, dans un premier temps, une solution de sulfate de manganèse et de nickel est préparée par dissolution, dans 200 mL d'eau, de sulfate de nickel NiSO₄^{∗}6H₂O (26,6 g) et de sulfate de manganèse MnSO₄^{∗}H₂O (51,2 g).

En parallèle, une autre solution est préparée par dissolution de carbonate de sodium Na₂CO₃ (42,4 g) dans de l'eau (200 mL) puis ajout d'ammoniaque (solution à 28%) (10 g).

Dans un réacteur de type CSTR, on introduit 500 mL d'eau et on la chauffe à 50°C. Puis, la solution de sulfate de nickel et de sulfate de manganèse est injectée en continu dans le réacteur. Le pH du réacteur est régulé à 7,5 en ajoutant l'autre solution. Pendant toute la durée de synthèse, à savoir, pendant 8 heures la vitesse d'agitation dans le réacteur est maintenue à 100 tours/minute, soit une puissance dissipée de 2,0 W/m³.

A l'issue de la durée de synthèse, le carbonate mixte ainsi obtenu et qui a précipité dans le réacteur est soumis à une centrifugation et est mis à sécher sous vide durant une nuit. Il en résulte un matériau sous forme de poudre.

### b) Etape de préparation d'un oxyde lamellaire de formule Na_{0,7}Li_{0,16}Ni_{0,2}Mn_{0,6}O₂ présentant un empilement de type P2

3 g de carbonate de formule Ni_{0,25}Mn_{0,75}CO₃ sont mélangés au mortier avec 0,38 g de Li₂CO₃ et 2,75g de Na₂CO₃. Le mélange est ensuite introduit dans un creuset puis calciné à 500°C pendant 8 heures. La poudre est ensuite récupérée et est rebroyée au mortier. La poudre est ensuite remise dans un creuset et le matériau est à nouveau calciné à 800°C pendant 8 heures. Le matériau ainsi créé à la suite de ce traitement est un oxyde lamellaire de type structural P2 de formule Na_{0,7}Li_{0,16}Ni_{0,2}Mn_{0,6}O₂.

### c) Etape de préparation d'un oxyde lamellaire de formule Li_{1,2}Ni_{0,2}Mn_{0,6}O₂ présentant un empilement de type O2

2 g de Na_{0.7}Li_{0.16}Ni_{0.2}Mn_{0,6}O₂ sont mélangés au mortier avec 8,575g de LiNO₃ et 0,7189 g de LiCl. Le mélange est ensuite placé dans un creuset et est chauffé à 280°C pendant 2 heures afin de réaliser l'échange du sodium par du lithium. La poudre récupérée est ensuite abondamment lavée avec de l'eau à 80°C sur un Büchner. La poudre est alors séchée une nuit sous vide à 70°C. Le produit sec obtenu correspond donc à un oxyde lamellaire de type structural O2 de formule Li_{1,2}Ni_{0,2}Mn_{0,6}O₂.

### d) Etape de dépôt d'une couche de carbonate de manganèse MnCO₃ sur l'oxyde lamellaire préparé à l'étape précédente

Dans un bêcher, 0,31 g de MnSO₄.H₂O sont dissous dans 100 mL d'eau. La température de la solution est alors montée à 60°C. 5 grammes de Li_{1.2}Ni_{0.2}Mn_{0.6}O₂ de type structural O2 est introduit dans la solution et le tout est agité très vigoureusement. Dans une autre solution, 0,20 g de Na₂CO₃ sont dissous dans 100 mL d'eau. Cette solution est ensuite ajoutée goutte à goutte dans la solution contenant l'oxyde lamellaire de type structural O2. L'agitation et la température sont maintenues quatre heures après l'ajout complet de la solution de carbonate de sodium. La poudre est alors filtrée et lavée sur Büchner avec de l'eau. La poudre est alors séchée à 70 °C sous vide afin d'éviter d'oxyder la couche de carbonate de manganèse formée.

### e) Etape d'oxydation de la couche de MnCO₃ pour obtenir une couche d'oxyde de manganèse MnO₂

A l'étape d), il est obtenu un oxyde lamellaire de type structural O2 enrobé d'une couche de MnCO₃. La poudre obtenue est alors fractionnée en plusieurs lots qui sont calcinés, sous air, à 400°C pendant des durées différentes (0 min, 5 min, 15 min et 30 min).

Il ressort des résultats obtenus par diffraction des rayons X qu'il y a apparition de pics correspondant à un empilement de type O3 pour un traitement thermique de 400°C à partir de 15 minutes, la proportion de ce type d'empilement augmentant encore lorsque la durée est de 30 minutes.

Pour une durée de 5 minutes, il n'y a pas de matériau présentant un empilement de type O3 mais uniquement un empilement de type O2, ce matériau étant ainsi conforme à l'invention.

### EXEMPLE 2

Dans cet exemple sont testées les performances électrochimiques de quatre matériaux, qui sont les suivants :
- un matériau consistant en la poudre obtenue à l'issue de l'étape c) de l'exemple 1 (dit premier matériau ou également matériau hôte) ;
- un matériau consistant en la poudre obtenue à l'issue de l'étape e) de l'exemple 1 avec un traitement thermique de 400°C pendant 5 minutes (dit deuxième matériau ou matériau conforme à l'invention) ;
- un matériau consistant en la poudre obtenue à l'issue de l'étape e) de l'exemple 1 avec un traitement thermique de 400°C pendant 15 minutes (dit troisième matériau) ; et
- un matériau consistant en la poudre obtenue à l'issue de l'étape e) de l'exemple 1 avec un traitement thermique de 400°C pendant 30 minutes (dit quatrième matériau).

Pour ce faire, il est a été élaboré, à partir des matériaux susmentionnés, des piles-boutons comprenant les éléments suivants :
- une électrode positive circulaire de diamètre 14 mm constituée d'un collecteur de courant en aluminium dont la face supérieure est recouverte d'un mélange composé du premier, deuxième, troisième ou quatrième matériau (80 % massique) avec 10% d'additif conducteur carboné et 10% de polyfluorure de vinylidène (PVDF) ;
- une électrode négative de diamètre 14 mm constituée de lithium métallique ;
- entre ladite électrode positive et ladite électrode négative, un séparateur imbibé d'un électrolyte (1 mol/L LiPF₆ dans EC/PC/DMC selon un ratio volumique de 1/1/3), EC correspondant au carbonate d'éthylène, PC au carbonate de propylène et DMC au carbonate de diméthyle.

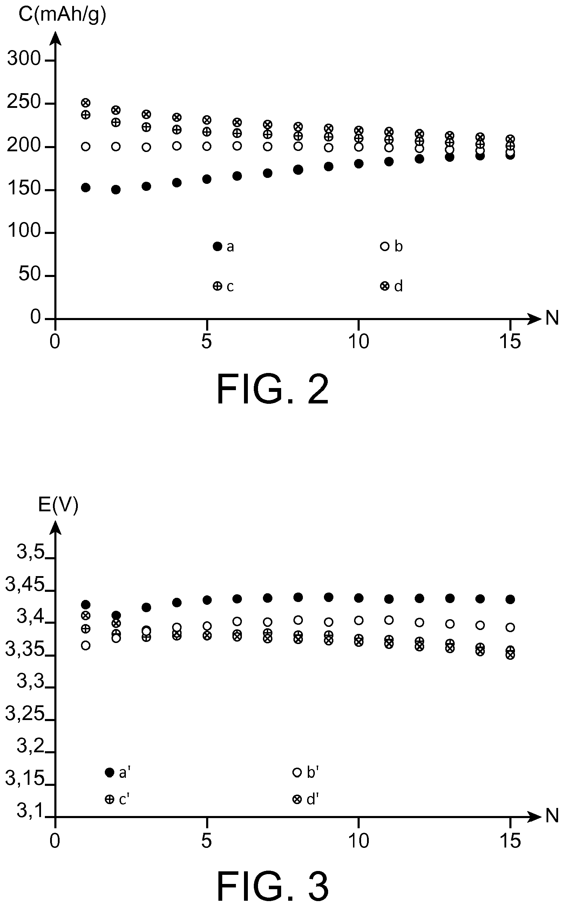

La pile ainsi préparée subit une séquence de cyclage (15 cycles) et il est déterminé l'évolution de capacité (en mAh/g) en fonction du nombre de cycles, les résultats étant reportés sur la figure 1 jointe en annexe (courbes a) à d) pour respectivement le premier matériau, le deuxième matériau, le troisième matériau et le quatrième matériau) et également l'évolution du potentiel (en V) en fonction du nombre de cycles, les résultats étant reportés sur la figure 2 jointe en annexe (courbes a') à d') pour respectivement le premier matériau, le deuxième matériau, le troisième matériau et le quatrième matériau).

De la courbe a), il ressort que le premier matériau ou matériau hôte présente des performances de l'ordre de 200 mAh/g au bout de 15 cycles, ce qui correspond à un temps d'activation long. La courbe a') permet également d'arriver à la même conclusion en termes de temps d'activation, car le potentiel se stabilise également assez lentement.

Pour les courbes c) et d) et c') et d'), on observe une augmentation de la capacité mais surtout une chute du potentiel moyen au cours du cyclage, ce qui peut s'expliquer par le fait qu'une partie non négligeable de l'oxyde présentant un empilement de type O2 a été transformée en oxyde présentant un empilement de type O3.

Enfin, pour la courbe b) et la courbe b'), on observe une capacité de 200 mAh/g dès les premiers cycles et une stabilité du potentiel au cours du cyclage, ce qui atteste de la supériorité du matériau conforme à l'invention par rapport aux autres matériaux.

## Revendications

1. Matériau d'électrode positive pour batterie au lithium comprenant un oxyde lamellaire métallique lithié comprenant un ou plusieurs éléments métalliques disposés sous forme de feuillets de cations métalliques et du lithium disposé dans des interfeuillets de cations lithium et, en partie, dans les feuillets de cations métalliques, lesdits interfeuillets assurant la séparation entre lesdits feuillets, ledit oxyde présentant un empilement O2 et répondant à la formule (I) suivante :
Li_{(a+b)}Ni_{c}Mn_{d}CoₑM_{f}O_{g} (I)
dans laquelle :
^{∗}a représente la proportion de lithium compris dans les interfeuillets et étant supérieur à 0 et inférieur ou égal à 1 ;
^{∗}b représente la proportion de lithium compris dans les feuillets de cations métalliques et étant supérieur à 0 et inférieur ou égal à (1/3) ;
^{∗}c, d, e et f sont compris entre 0 et 1, avec la condition que b+c+d+e+f=1, de sorte à ce que l'électroneutralité de l'oxyde de formule (I) soit respectée ;
^{∗}g est compris entre 1,9 et 2,1 ;
*lorsque f est différent 0, M est au moins un élément choisi parmi Al, Fe, Ti, Cr, V, Cu, Mg, Zn, Na, K, Ca, Sc et les combinaisons de ceux-ci ;
**caractérisé en ce que** ledit oxyde est recouvert, en tout ou partie, par un oxyde de formule (II) suivante :
MnₕM'ᵢO₂ (II)
dans laquelle :
^{∗}0<h≤1,5, de préférence égal à 1 ;
^{∗}M' est un au moins un élément choisi parmi Ni, Al, Fe, Ti, Cr, V, Cu, Mg, Zn, Na, K, Ca, Sc
^{∗}0≤i≤1,5.

2. Matériau selon la revendication 1, dans lequel e et f sont égaux à 0, auquel cas l'oxyde lamellaire lithié répond à la formule (III) suivante :
Li_{(a+b)}Ni_{c}Mn_{d}O_{g} (III)
avec a, b, c et d étant tels que définis à la revendication 1.

3. Matériau selon la revendication 1 ou 2, dans lequel l'oxyde lamellaire lithié répond à la formule (IV) suivante :
Li_{1,2}Ni_{0,2}Mn_{0,6}O₂ (IV)

4. Matériau selon l'une quelconque des revendications précédentes, dans lequel (a+b) est supérieur à 1, auquel cas l'oxyde lamellaire appartient à la catégorie des oxydes lamellaires surlithiés.

5. Matériau selon l'une quelconque des revendications précédentes, dans lequel h est égal à 0, auquel cas l'oxyde recouvrant l'oxyde lamellaire lithié est de l'oxyde de manganèse MnO₂.

6. Matériau selon l'une quelconque des revendications précédentes, dans lequel le matériau se présente sous forme de particules constituées par l'oxyde lamellaire lithié présentant un empilement de type O2, lesdites particules étant enrobées par une couche d'enrobage constituée par l'oxyde de formule (II) définie à la revendication 1.

7. Batterie au lithium comprenant au moins une cellule électrochimique comprenant un électrolyte disposé entre une électrode positive et une électrode négative, ladite électrode positive comprenant un matériau d'électrode positive tel que défini selon l'une quelconque des revendications 1 à 6.

8. Procédé de préparation d'un matériau d'électrode positive pour batterie au lithium comprenant un oxyde lamellaire métallique lithié comprenant un ou plusieurs éléments métalliques disposés sous forme de feuillets de cations métalliques et du lithium disposé dans des interfeuillets de cations lithium et, en partie, dans les feuillets de cations métalliques, lesdits interfeuillets assurant la séparation entre lesdits feuillets, ledit oxyde présentant un empilement O2 et répondant à la formule (I) suivante :
Li_{(a+b)}Ni_{c}Mn_{d}CoₑM_{f}O_{g} (I)
dans laquelle :
^{∗}a représente la proportion de lithium compris dans les interfeuillets et étant supérieur à 0 et inférieur ou égal à 1 ;
^{∗}b représente la proportion de lithium compris dans les feuillets de cations métalliques et étant supérieur à 0 et inférieur ou égal à (1/3) ;
^{∗}c, d, e et f sont compris entre 0 et 1, avec la condition que b+c+d+e+f=1, de sorte à ce que l'électroneutralité de l'oxyde de formule (I) soit respectée ;
^{∗}g est compris entre 1,9 et 2,1; par exemple, est égal à 2.
*lorsque f est différent 0, M est au moins un élément choisi parmi Al, Fe, Ti, Cr, V, Cu, Mg, Zn, Na, K, Ca, Sc et les combinaisons de ceux-ci ;
ledit oxyde étant recouvert, en tout ou partie, par un oxyde de formule (II) suivante :
MnₕM'ᵢO₂ (II)
dans laquelle :
^{∗}0<h≤1,5, de préférence égal à 1 ;
^{∗}M' est au moins un élément choisi parmi Ni, Al, Fe, Ti, Cr, V, Cu, Mg, Zn, Na, K, Ca, Sc ;
^{∗}0≤i≤1,5 ;
ledit procédé comprenant les étapes suivantes :
a) une étape de synthèse de l'oxyde lamellaire lithié présentant un empilement de type O2 ;
b) une étape de synthèse de l'oxyde de formule (II) sur tout ou partie de l'oxyde lamellaire lithié.

9. Procédé de préparation selon la revendication 8, dans lequel l'étape de synthèse b) comprend les opérations suivantes :
i1) une opération de préparation d'une solution comprenant des cations manganèse et, le cas échéant, des cations de l'élément M' ;
i2) une opération de mise en contact de la solution préparée en i1) avec l'oxyde lamellaire lithié présentant un empilement de type O2 préparé au cours de l'étape a) telle que définie à la revendication 8 ;
i3) une opération d'ajout au mélange obtenu en i2) d'une solution comprenant des anions carbonates ou des anions hydroxydes et de réaction, moyennant quoi il résulte l'oxyde lamellaire lithié présentant un empilement de type O2 revêtu en tout ou partie par un carbonate comprenant du manganèse et, le cas échéant, l'élément M' ou par un hydroxyde comprenant du manganèse et, le cas échéant, l'élément M' ;
i4) une opération d'oxydation du carbonate comprenant du manganèse et, le cas échéant, l'élément M' ou de l'hydroxyde comprenant du manganèse et, le cas échéant, l'élément M', moyennant quoi il subsiste l'oxyde lamellaire lithié présentant un empilement de type O2 revêtu, en tout ou partie, par un oxyde de formule (II) susmentionnée.

10. Procédé de préparation selon la revendication 9, dans lequel l'opération d'oxydation est réalisée sous air dans des conditions de température et de durée, qui préservent l'oxyde lamellaire lithié présentant un empilement de type O2.

## Patentansprüche

1. Positivelektrodenmaterial für Lithiumbatterie, umfassend ein lithiiertes geschichtetes Metalloxid, das ein oder mehrere metallische Elemente, die in Form von Metallkationenschichten angeordnet sind, und Lithium umfasst, das in Lithiumkationenzwischenschichten und zum Teil in den Metallkationenschichten angeordnet ist, wobei die Zwischenschichten die Trennung zwischen den Schichten gewährleisten, wobei das Oxid einen Stapel O2 aufweist und der folgenden Formel (I) entspricht:
Li(_{a+b})Ni_{c}Mn_{d}CoₑM_{f}O_{g} (I)
in welcher:
^{∗}a den Lithiumanteil in den Zwischenschichten darstellt und größer als 0 und kleiner als oder gleich 1 ist;
^{∗}b den Lithiumanteil in den Metallkationenschichten darstellt und größer als 0 und kleiner als oder gleich (1/3) ist;
^{∗}c, d, e und f zwischen 0 und 1 liegen, unter der Bedingung, dass b+c+d+e+f=1, so dass die Elektroneutralität des Oxids der Formel (I) eingehalten wird;
^{∗}g zwischen 1,9 und 2,1 liegt;
^{∗}wenn f von 0 unterschiedlich ist, M mindestens ein Element ist, das aus Al, Fe, Ti, Cr, V, Cu, Mg, Zn, Na, K, Ca, Sc und den Kombinationen derselben ausgewählt ist;
**dadurch gekennzeichnet, dass** das Oxid vollständig oder teilweise von einem Oxid der folgenden Formel (II) beschichtet ist:
MnₕM_{'i}O₂ (II)
in welcher:
^{∗}0<h≤1,5, vorzugsweise gleich 1;
^{∗}M' mindestens ein Element ist, das aus Ni, Al, Fe, Ti, Cr, V, Cu, Mg, Zn, Na, K, Ca, Sc ausgewählt ist;
^{∗}0≤i≤1,5.

2. Material nach Anspruch 1, wobei e und f gleich 0 sind, wobei in diesem Fall das lithiierte geschichtete Oxid der folgenden Formel (III) entspricht:
Li_{(a+b)}Ni_{c}Mn_{d}O_{g} (III)
mit a, b, c und d, die wie in Anspruch 1 definiert sind.

3. Material nach Anspruch 1 oder 2, wobei das lithiierte geschichtete Oxid der folgenden Formel (IV) entspricht:
Li_{1,2}Ni_{0,2}Mn_{0,6}O₂ (IV)

4. Material nach einem der vorangehenden Ansprüche, wobei (a+b) größer als 1 ist, wobei in diesem Fall das geschichtete Oxid zu der Kategorie der überlithiierten geschichteten Oxide gehört.

5. Material nach einem der vorangehenden Ansprüche, wobei h gleich 0 ist, wobei in diesem Fall das Oxid, das das lithiierte geschichtete Oxid beschichtet, Manganoxid MnO₂ ist.

6. Material nach einem der vorangehenden Ansprüche, wobei das Material in Form von Partikeln vorliegt, die aus dem lithiierten geschichteten Oxid bestehen, das einen Stapel vom Typ O2 aufweist, wobei die Partikel von einer Hüllschicht umhüllt sind, die aus dem Oxid der Formel (II) besteht, die in Anspruch 1 definiert ist.

7. Lithiumbatterie, umfassend mindestens eine elektrochemische Zelle, die einen Elektrolyten umfasst, der zwischen einer positiven Elektrode und einer negativen Elektrode angeordnet ist, wobei die positive Elektrode ein Positivelektrodenmaterial umfasst, wie nach einem der Ansprüche 1 bis 6 definiert.

8. Verfahren zur Herstellung eines Positivelektrodenmaterials für Lithiumbatterie, umfassend ein lithiiertes geschichtetes Metalloxid, das ein oder mehrere metallische Elemente, die in Form von Metallkationenschichten angeordnet sind, und Lithium umfasst, das in Lithiumkationenzwischenschichten und zum Teil in den Metallkationenschichten angeordnet ist, wobei die Zwischenschichten die Trennung zwischen den Schichten gewährleisten, wobei das Oxid einen Stapel O2 aufweist und der folgenden Formel (I) entspricht:
Li_{(a+b)}Ni_{c}Mn_{d}CoₑM_{f}O_{g} (I)
in welcher:
^{∗}a den Lithiumanteil in den Zwischenschichten darstellt und größer als 0 und kleiner als oder gleich 1 ist;
^{∗}b den Lithiumanteil in den Metallkationenschichten darstellt und größer als 0 und kleiner als oder gleich (1/3) ist;
^{∗}c, d, e und f zwischen 0 und 1 liegen, unter der Bedingung, dass b+c+d+e+f=1, so dass die Elektroneutralität des Oxids der Formel (I) eingehalten wird;
^{∗}g zwischen 1,9 und 2,1 liegt; beispielsweise gleich 2 ist;
^{∗}wenn f von 0 unterschiedlich ist, M mindestens ein Element ist, das aus Al, Fe, Ti, Cr, V, Cu, Mg, Zn, Na, K, Ca, Sc und den Kombinationen derselben ausgewählt ist;
wobei das Oxid vollständig oder teilweise von einem Oxid der folgenden Formel (II) beschichtet ist:
MnₕM'ᵢO₂ (II)
in welcher:
^{∗}0<h≤1,5, vorzugsweise gleich 1;
^{∗}M' mindestens ein Element ist, das aus Ni, Al, Fe, Ti, Cr, V, Cu, Mg, Zn, Na, K, Ca, Sc ausgewählt ist;
^{∗}0≤i≤1,5,
wobei das Verfahren die folgenden Schritte umfasst:
a) einen Syntheseschritt des lithiierten geschichteten Oxids, das einen Stapel vom Typ O2 aufweist;
b) einen Syntheseschritt des Oxids der Formel (II) auf dem gesamten oder einem Teil des lithiierten geschichteten Oxids.

9. Herstellungsverfahren nach Anspruch 8, wobei der Syntheseschritt b) die folgenden Vorgänge umfasst:
i1) einen Herstellungsvorgang einer Lösung, die Mangankationen und gegebenenfalls Kationen des Elements M' umfasst;
i2) einen Vorgang des Inkontaktversetzens der in i1) hergestellten Lösung mit dem lithiierten geschichteten Oxid, das einen Stapel vom Typ O2 aufweist, das in Schritt a) hergestellt wurde, wie in Anspruch 8 definiert;
i3) einen Vorgang des Hinzufügens einer Lösung, die Carbonatanionen oder Hydroxidanionen umfasst, zu dem in i2) erhaltenen Gemisch und der Reaktion, woraus das lithiierte geschichtete Oxid resultiert, das einen Stapel vom Typ O2 aufweist, das vollständig oder teilweise von einem Carbonat beschichtet ist, das Mangan und gegebenenfalls das Element M' umfasst oder von einem Hydroxid, das Mangan und gegebenenfalls das Element M' umfasst;
i4) einen Oxidationsvorgang des Carbonats, das Mangan und gegebenenfalls das Element M' umfasst oder des Hydroxids, das Mangan und gegebenenfalls das Element M' umfasst, wodurch das lithiierte geschichtete Oxid verbleibt, das einen Stapel vom Typ O2 aufweist, das vollständig oder teilweise von einem Oxid der obigen Formel (II) beschichtet ist.

10. Herstellungsverfahren nach Anspruch 9, wobei der Oxidationsvorgang in der Luft unter Temperatur- und Zeitdauerbedingungen durchgeführt wird, die das lithiierte geschichtete Oxid bewahren, das einen Stapel vom Typ O2 aufweist.

## Claims

1. Positive electrode material for a lithium battery comprising a lithiated metal layered oxide comprising one or more metal elements arranged in the form of layers of metal cations and lithium arranged in interlayers of lithium cations and, in part, in the layers of metal cations, said interlayers ensuring the separation between said layers, said oxide having a stack arrangement O2 and corresponding to the following formula (I):
Li(_{a+b})Ni_{c}Mn_{d}CoₑM_{f}O_{g} (I)
wherein:
^{∗}a represents the proportion of lithium included in the interlayers and being greater than 0 and less than or equal to 1;
^{∗}b represents the proportion of lithium included in the layers of metal cations and being greater than 0 and less than or equal to (1/3);
^{∗}c, d, e and f are between 0 and 1, with the condition that b+c+d+e+f=1, in such a way that the electroneutrality of the oxide of formula (I) is respected;
^{∗}g is between 1.9 and 2.1;
^{∗}when f is different from 0, M is at least one element selected from Al, Fe, Ti, Cr, V, Cu, Mg, Zn, Na, K, Ca, Sc and the combinations thereof;
**characterised in that** said oxide is coated, in whole or in part, with an oxide of the following formula (II):
MnₕM'ᵢO₂ (II)
wherein:
^{∗}0<h≤1.5, preferably equal to 1;
^{∗}M' is at least one element selected from Ni, Al, Fe, Ti, Cr, V, Cu, Mg, Zn, Na, K, Ca, Sc
^{∗}0≤i≤1.5.

2. Material according to claim 1, wherein e and f are equal to 0, in which case the lithiated layered oxide corresponds to the following formula (III):
Li(_{a+b})Ni_{c}Mn_{d}O_{g} (III)
with a, b, c and d being such as defined in claim 1.

3. Material according to claim 1 or 2, wherein the lithiated layered oxide corresponds to the following formula (IV):
Li_{1,2}Ni_{0,2}Mn_{0,6}O₂ (IV)

4. Material according to any preceding claim, wherein (a+b) is greater than 1, in which case the layered oxide belongs to the category of overlithiated layered oxides.

5. Material according to any preceding claim, wherein h is equal to 0, in which case the oxide covering the lithiated layered oxide is manganese oxide MnO₂.

6. Material according to any preceding claim, wherein the material has the form of particles formed by the lithiated layered oxide having a stack of the O2 type, said particles being coated with a layer of coating formed by the oxide of formula (II) defined in claim 1.

7. Lithium battery comprising at least one electrochemical cell comprising an electrolyte arranged between a positive electrode and a negative electrode, said positive electrode comprising a positive electrode material such as defined according to any of claims 1 to 6.

8. Method for preparing a positive electrode material for a lithium battery comprising a lithiated metal layered oxide comprising one or more metal elements arranged in the form of layers of metal cations and lithium arranged in interlayers of lithium cations and, in part, in the layers of metal cations, said interlayers ensuring the separation between said layers, said oxide having a stack arrangement O2 and corresponding to the following formula (I):
Li_{(a+b)}Ni_{c}Mn_{d}CoₑM_{f}O_{g} (I)
wherein:
^{∗}a represents the proportion of lithium included in the interlayers and being greater than 0 and less than or equal to 1;
^{∗}b represents the proportion of lithium included in the layers of metal cations and being greater than 0 and less than or equal to (1/3);
^{∗}c, d, e and f are between 0 and 1, with the condition that b+c+d+e+f=1, in such a way that the electroneutrality of the oxide of formula (I) is respected;
^{∗}g is between 1.9 and 2.1; for example, is equal to 2.
^{∗}when f is different from 0, M is at least one element selected from Al, Fe, Ti, Cr, V, Cu, Mg, Zn, Na, K, Ca, Sc and the combinations thereof;
said oxide being coated, in whole or in part, with an oxide of the following formula (II):
MnₕM'O₂ (II)
wherein:
^{∗}0<h≤1.5, preferably equal to 1;
^{∗}M' is at least element selected from Ni, Al, Fe, Ti, Cr, V, Cu, Mg, Zn, Na, K, Ca, Sc;
^{∗}0≤i≤1.5;
said method comprising the following steps:
a) a synthesis step of the lithiated layered oxide having a stack of the O2 type;
b) a synthesis step of the oxide of formula (II) over all or a portion of the lithiated layered oxide.

9. Method for preparing according to claim 8, wherein the synthesis step b) comprises the following operations:
i1) an operation of preparing a solution comprising manganese cations and, where applicable, cations of the element M';
i2) an operation of putting into contact the solution prepared in i1) with the lithiated layered oxide having a stack of the O2 type prepared during the step a) such as defined in claim 8;
i3) an operation of adding to the mixture obtained in i2) a solution comprising carbonate anions or hydroxide anions and of reacting, with which results the lithiated layered oxide having a stack of the O2 type coated entirely or partially with a carbonate comprising manganese and, where applicable, the element M' or with a hydroxide comprising manganese and, where applicable, the element M';
i4) an oxidation operation of the carbonate comprising manganese and, where applicable, the element M' or hydroxide comprising manganese and, where applicable, the element M', with which there remains the lithiated layered oxide having a stack of the O2 type coated, in whole or in part, with an oxide of the aforementioned formula (II).

10. Method for preparing according to claim 9, wherein the oxidation operation is carried out under air in conditions of temperature and of duration, that preserve the lithiated layered oxide having a stack of the O2 type.
